(19) **Europäisches Patentamt**
**European Patent Office**
**Office européen des brevets**

(11) **EP 2 818 382 B1**

(12) **EUROPEAN PATENT SPECIFICATION**

(45) Date of publication and mention
of the grant of the patent:
**29.05.2019 Bulletin 2019/22**

(51) Int Cl.:
**B62B 9/00** *(2006.01)*    **B62B 5/00** *(2006.01)*

(21) Application number: **13466010.9**

(22) Date of filing: **24.06.2013**

(54) **Automatic electrical propulsion for prams or stroller**

**Automatischer elektrischer Antrieb für Kinderwagen und Kinderbuggys**

**Propulsion électrique automatique pour landaus ou poussettes**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.12.2014 Bulletin 2015/01**

(60) Divisional application:
**19170141.6**

(73) Proprietor: **Goodbaby Mechatronics s.r.o.
186 00 Praha 8 - Karlin (CZ)**

(72) Inventor: **Spour, Jiri
25241 Zlatniky-Hodkovice (CZ)**

(74) Representative: **Meissner Bolte Partnerschaft
mbB
Patentanwälte Rechtsanwälte
Postfach 86 06 24
81633 München (DE)**

(56) References cited:
**DE-U1-202007 008 851    DE-U1-202011 109 457
FR-A1- 2 688 181    US-B1- 7 987 933
US-B1- 8 033 348**

**Description**

**Field of the Invention:**

The invention concerns the additional electrical propulsion for the standard pram or stroller but the propulsion is activated automatically only when it is useful on the ascent or on the flat surface with the heavy load of the pram. The purpose of the invention is to implement fully-automatic propulsion on the pram or stroller as easy to operate as a normal pram/stroller without propulsion.

**Background of the invention:**

The actual state of this art includes prams/strollers with basic propulsion, which means, an electric engine and an accelerator lever or button; and a person who is operating the pram/stroller has to regulate the speed with the accelerator lever manually (patent US 8,033,348 or DE 20 2011 109 457 U1) so the propulsion output power is linearly proportional to the position of this lever. Patent 1992 FR-A-2 688 181 describes the propulsion control with the bar under the handle and the distance between the bar and the handle represents the propulsion output power. There is also a patent with two electric motors and two control devices for each of them (DE 20 2007 008 851 U1). In this cases it is necessary to place the accelerator lever on the pram's handle and a person who is operating the pram has to use one hand or some fingers for operate the control device and therefore his/her attention is not fully focused on the pram's control.

The bellow mentioned problems are the primary reasons why electric propulsion is not widely demanded on the market at the moment. Therefore most of the sold prams/strollers are sold without any propulsion.

The first group of problems concerns the technical or ergonomic aspects for operating the electric pram/stroller with manual control lever:

1) The usage of a pram with electric engine and accelerator lever is not natural. It is necessary and could be difficult to coordinate the accelerator lever, the pushing and the handling.
2) The hands position of the person who is operating the pram is different than the normal pram without propulsion.
3) The person who is operating the pram has to divide his/her attention to control the propulsion.
4) There is a problem with the smoothness of the pram's movements, because the surface of the way is not straight and the engine does not have enough feedback power to sustain the pram's speed.
5) The moment of switching on and off is not automatically defined and depends on the person who is operating the pram.
6) The maximum speed of a pram with propulsion is very low due to safety concerns for the baby.

7) And the last but not least problem is that the accelerator lever has a bad impact on the design of the pram/stroller.

The second group of problems concerns the safety of the baby. There are not sensors or any other devices which would stop the propulsion and the pram's movement in case of danger which implies that it can come to pass several dangerous situations:

1) Failure of the electrical circuits could cause uncontrolled movement of the pram/stroller and bring potential danger to the baby.
2) The person who is operating the pram or stroller could make a mistake with the manipulation of the lever and it can bring potential danger to the baby.
3) The person who is operating the pram/stroller could have a sudden impairing health situation and it could cause uncontrolled movement and bring potential danger to the baby.

**Disclosure of invention**

The above mentioned disadvantages are eliminated by using the method of the presented automated control of the pram's electric propulsion. The invention concerns additional electrical propulsion for the standard pram or stroller. However, the propulsion is not directly controlled by the person who is pushing the pram but is controlled by a micro-computer automatically.

The electric propulsion is activated only in case the pushing force ($F_p$) rises above the define activation level ($F_{on}$) ; the other way the electric propulsion is deactivated in case the pushing force ($F_p$) fall under the define deactivation level ($F_{off}$) which implies two operation modes:

a. Active mod - $F_p$ reaches $F_{on}$ and simultaneously $F_p$ does not fall under $F_{off}$.
The electric engine drives the rear wheels so that average value of $F_p$ will be constant and be equal to $F_{on}$.
b. Non active mode - $F_p$ does not reach $F_{on}$ or $F_p$ fall under $F_{off}$. For example in case of a descent.

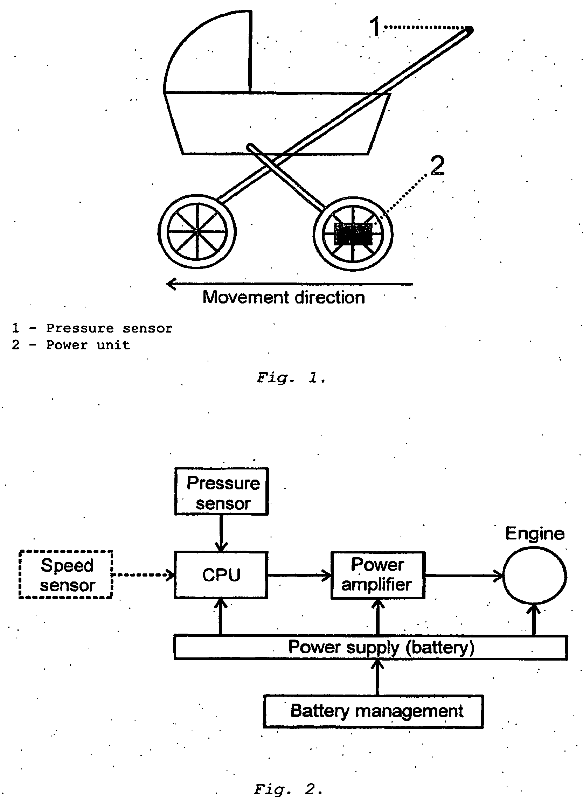

There is a power unit on the rear end of the pram's chassis and it is placed between the rear wheels. The front wheels are independent from the rear wheels therefore the front wheels could keep on revolving. And the last component of the system is a pressure sensor (it can be mechanical or electrical) placed on the pram's handle which is the only component placed outside of the power unit (Fig. 1).

In case of active mode the revolution of the engine is controlled by the CPU depending on the pressure force of the person who is operating the pram/stroller. And then the revolution of the engine is:

$$n = f\ (\ P_i;\ R;\ A_k)$$

n ...... the revolution of the engine
$P_i$ ...... the input engine's power
R ...... the engine's load
$A_k$ ...... engine's parameters constant

There is only one variable that can affect the revolution in real which is the input engine's power ($P_i$). The engine's parameters are given, therefore $A_k$ is constant. And the engine's load is not possible to be predicted in advance of real time.

It is necessary to think how is the pressure force ($F_p$) changing in real time. Because the pressure force ($F_p$) is not constant, it is necessary to control the input engine's power depending on the average pressure force in a definite elapse of time.

It could be convenient to measure the real engine's revolution arid control the input engine's power to keep the engine's revolution constant. The change of the engine's revolution depends on the change of the average pressure force.

Electronic components (Fig. 2):

a) *the CPU (central processing unit)*

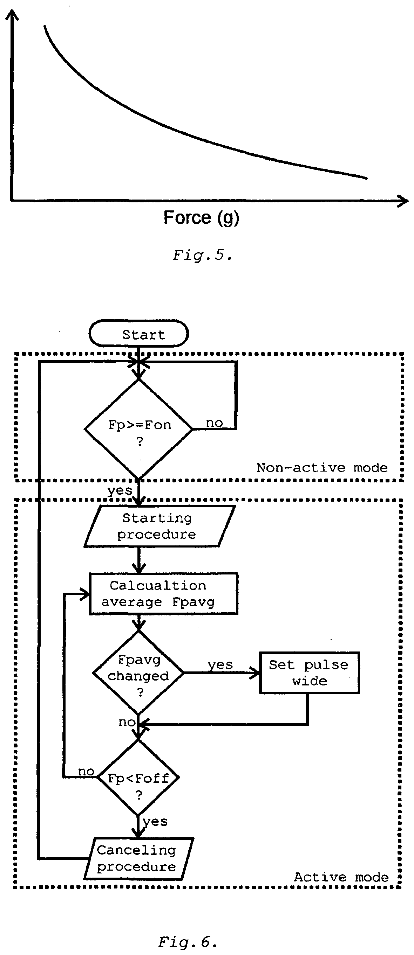

This component is a 8 bit microprocessor that controls input and output signals and all the logic around the propulsion (input power of the engine and alternatively the switching of the clutch). In case of DC engine we can use the wide pulse modulation (PWM) for controlling the engine (the flow chart is shown on Fig.6).

Input signals:

- actual pushing force
- actual wheel's speed (optional).

Output signal:

- the signal for the amplifier which controls the engine's revolution
- alternatively the switching on or off the clutch
- the other signalization

Basic parameters for DC engine:

- the optimal PWM signal frequency is between 500Hz and 1kHz

- the microprocessor clock rate has to be at least 1000x higher than PWM signal frequency
- the optimal period for average pushing force calculation is 1,5s
- the microprocessor has to have A/D convertor

b) *the pressure sensor*

There is the pressure sensor on the pram's handle which measures the intensity of the pushing force ($F_p$). This sensor can be mechanical or electrical and it is connected directly to the A/D input of the CPU. In case of the electrical sensor, the sensor is placed in the central area of the pram's handle. This sensor changes his internal resistance depending on the pressure of the mechanical force (Fig. 5)

c) *the speed sensor'*

This sensor measures the number of revolutions of the rear wheels or rather the rear shaft before the differential. This component is not necessary for the basic principle of this invention but can provide the linear operation and the run-up of the engine.

d) *the power amplifier*

The semi-conductor MOSFET transistor supplies power to the engine. The parameters of this transistor are dependent primary on the required input power of the engine.

e) *the battery pack*

It is possible to use any kind of battery but in this case it is necessary to use batteries with low weight, with high output current, with large capacity and sufficiently safe. The nominal voltage and total capacity are dependent on the chosen engine.

f) *the battery control unit*

It is the electronic circuit which controls the primary switching on or off and the discharging of battery. Battery charging is solved externally because it is necessary to take the battery out of the pram/stroller and charging it separately.

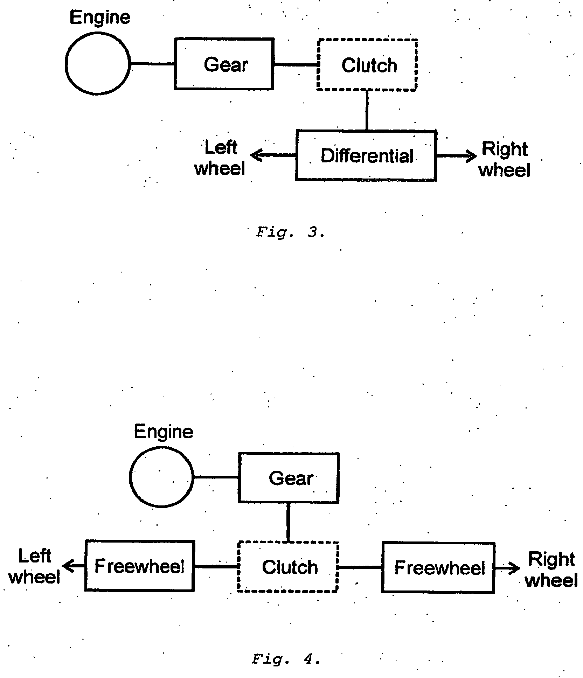

Mechanical components (Fig. 3 or Fig. 4):

a) the engine

This component is a convertor of electric energy to mechanical power. It is possible to use AC or DC engine but it is very important to choose an engine with good characteristics. In the case of the DC engine it is strongly recommend this set of characteristics:

○ Rated power round 40W
○ Rated voltage 12V
○ Rated revolution around 5000 rev/min
○ Maximal revolution around 7000 rev/min
○ Rated current around 6A
○ Basic torque 700 g/cm

b) the gear

The electric engine has a high rated revolution and for this application it is necessary to use gear because the pram needs torque instead of speed. The gear ratio depends on the engine's rated revolution and it is optimal to calculate the maximal pram's speed around 10 km/h. In the case of the recommended engine and 25cm diameter wheels the gear ratio will be 24 to 1.

c) the clutch

This component is not necessary for the basic principle of this invention but can provide:

○ Smooth start of the propulsion in case $F_p$ increases above $F_{on}$
○ In case of electrical circuits failure the clutch switches off automatically ensuring the safety of the baby.
○ The clutch ensures that in case of non active propulsion the engine should not have negative effect on the movement of the pram/stroller.

The principle of the slippery clutch is as the same as in the automotive industry. The clutch switching mode is controlled electronically by the CPU.

d) the differential or the freewheel

These components transfer the mechanical power to the left and right wheel independently. The alternative for freewheel (Fig. 4) is cheaper but there is one problem with the rear wheels' freedom of movement in case of backward movement. The rear wheels are locked together during the backward movement. Therefore the best way is to use a small differential whose principle is known from automotive industry.

**Brief description of the drawings**

Figure 1 - The position of the power unit and the pressure sensor.
Figure 2 - The principle diagram of electronic components.
Figure 3 - The principle diagram of mechanical components in case of the differential usage.
Figure 4 - The principle diagram of mechanical components in case of the freewheel usage.
Figure 5 - The pressure sensor resistance depending on pressure force.
Figure 6 - The operation flowchart of the CPU software.

**Claims**

1.  A method for electric propulsion of a pram or stroller equipped with a power unit between its rear wheels, comprising the steps of
measuring a pushing force ($F_p$) exerted by a person pushing the pram or stroller,

    • comparing said pushing force ($F_p$) with an activation level ($F_{on}$) for activating electric propulsion, and
    • if the pushing force ($F_p$) is equal to or greater than the activation level ($F_{on}$), driving the power unit such that the average level of the pushing force ($F_p$) will be constant and equal to the activation level ($F_{on}$) regardless of external aspects like load, quality and tilt of surface.

2.  The method of claim 1, further comprising the step of comparing the pushing force ($F_p$) with a deactivation level ($F_{off}$), and cancelling electric propulsion if the pushing force ($F_p$) is smaller than the deactivation level ($F_{off}$).

3.  A pram or stroller equipped with an electric power unit between its rear wheels, a pressure sensor on the handle and a central processing unit adapted to carry out the method of claim 1 or 2.

4.  The pram or stroller according to claim 3, wherein the pressure sensor is of mechanical or electrical type and directly connected to the central processing unit.

5.  The pram or stroller according to claim 3 or 4, comprising additional sensors to measure physical variables like revolution speed, tilt or acceleration, which variables are useful to increase smoothness and comfort of movement control.

**Patentansprüche**

1.  Verfahren zum elektrischen Antrieb eines Kinderwagens, der mit einem Antrieb zwischen seinen Hinterrädern ausgestattet ist, umfassend die Schritte des Messens einer Schubkraft ($F_p$), die von einer Person ausgeübt wird, die den Kinderwagen schiebt,

    • Vergleichen der Schubkraft ($F_p$) mit einer Aktivierungsstufe ($F_{on}$) zum Aktivieren des elektrischen Antriebs, und
    • wenn die Schubkraft ($F_p$) gleich groß wie oder größer als die Aktivierungsstufe ($F_{on}$) ist, Antreiben des Antriebs, so dass die durchschnittliche Stufe der Schubkraft ($F_p$) konstant und gleich groß wie die Aktivierungsstufe ($F_{on}$) unabhängig von äußeren Aspekten wie Ladung, Qualität und Neigung der Oberfläche, sein wird.

2. Verfahren nach Anspruch 1, ferner umfassend den Schritt des Vergleichens der Schubkraft ($F_p$) mit einer Deaktivierungsstufe ($F_{off}$) und Beenden des elektrischen Antriebs, wenn die Schubkraft ($F_p$) kleiner als die Deaktivierungsstufe ($F_{off}$) ist.

3. Kinderwagen, der mit einem elektrischen Antrieb zwischen seinen Hinterrädern, einem Drucksensor auf dem Handgriff und einer zentralen Verarbeitungseinheit, die angepasst ist, um das Verfahren nach Anspruch 1 oder 2 auszuführen, ausgestattet ist.

4. Kinderwagen nach Anspruch 3, wobei der Drucksensor vom mechanischen oder elektrischen Typ ist und direkt mit der zentralen Verarbeitungseinheit verbunden ist.

5. Kinderwagen nach Anspruch 3 oder 4, umfassend zusätzliche Sensoren zum Messen von physikalischen Variablen wie Drehzahl, Neigung oder Beschleunigung, wobei die Variablen nützlich sind, um die Sanftheit und den Komfort der Bewegungssteuerung zu erhöhen.

**Revendications**

1. Procédé pour la propulsion électrique d'un landau ou d'une poussette équipé(e) d'un groupe moteur entre ses roues arrières, comprenant les étapes de mesure d'une force de poussée ($F_p$) exercée par une personne poussant le landau ou la poussette,

• la comparaison de ladite force de poussée ($F_p$) avec un niveau d'activation ($F_{on}$) pour activer une propulsion électrique, et
• si la force de poussée ($F_p$) est supérieure ou égale au niveau d'activation ($F_{on}$), la commande du groupe moteur de sorte que le niveau de la force de poussée ($F_p$) sera constant et égal au niveau d'activation ($F_{on}$) indépendamment des aspects extérieurs tels la charge, la qualité et l'inclinaison de la surface.

2. Procédé selon la revendication 1, comprenant en outre l'étape de comparaison de la force de poussée ($F_p$) avec un niveau de désactivation ($F_{off}$), et l'annulation de la propulsion électrique si la force de poussée ($F_p$) est inférieure au niveau de désactivation ($F_{off}$).

3. Landau ou poussette équipé(e) d'un groupe moteur électrique entre ses roues arrières, d'un capteur de pression sur le guidon, et d'une unité de traitement centrale adaptée pour mettre en oeuvre le procédé selon la revendication 1 ou 2.

4. Landau ou poussette selon la revendication 3, dans lequel/laquelle le capteur de pression est de type mécanique ou électrique et est directement connecté à l'unité de traitement centrale.

5. Landau ou poussette selon la revendication 3 ou 4, comprenant des capteurs supplémentaires pour mesurer des variables physiques telles la vitesse de rotation, l'inclinaison ou l'accélération, lesquelles variables sont utiles pour augmenter la régularité et le confort de la commande du mouvement.

1 - Pressure sensor
2 - Power unit

*Fig. 1.*

*Fig. 2.*

Engine

Gear

Clutch

Left
wheel

Differential

Right
wheel

*Fig. 3.*

Engine

Gear

Left
wheel

Freewheel

Clutch

Freewheel

Right
wheel

*Fig. 4.*

Fig.5.

Fig.6.

8

**EP 2 818 382 B1**

**Patent documents cited in the description**

- US 8033348 B
- DE 202011109457 U1
- FR 2688181 A
- DE 202007008851 U1